# EUROPÄISCHE PATENTSCHRIFT

(11) **EP 2 988 920 B1**
(45) Veröffentlichungstag und Bekanntmachung des Hinweises auf die Patenterteilung: **04.03.2020**
(21) Anmeldenummer: 14715327.4
(22) Anmeldetag: 07.04.2014
(51) Int. Cl.: B29C 65/48, B29C 70/08, B32B 7/12, B32B 15/14, B29C 65/50, B29C 70/34, B32B 5/02, B29L 31/30, B62D 29/00

(54) **VERFAHREN ZUR HERSTELLUNG VON HYBRIDBAUTEILEN**
METHOD FOR PRODUCING HYBRID COMPONENTS
PROCÉDÉ PERMETTANT DE FABRIQUER DES ÉLÉMENTS HYBRIDES

(30) Priorität: 26.04.2013 DE 102013207676
(43) Veröffentlichungstag der Anmeldung: 02.03.2016
(73) Patentinhaber: Bayerische Motoren Werke Aktiengesellschaft, 80809 München (DE)
(72) Erfinder: FISCHER, Michael, 84137 Vilsbiburg (DE)
(86) Internationale Anmeldenummer: PCT/EP2014/056919
(87) Internationale Veröffentlichungsnummer: WO 2014/173669

(56) Entgegenhaltungen:
- WO-A1-02/066235
- DE-A1- 3 634 596
- US-A1- 2010 269 979

## Beschreibung

Die Erfindung betrifft ein Verfahren zur Herstellung von Hybridbauteilen, die aus einem räumlich bzw. dreidimensional geformten Blechmaterial und einem faserverstärkten Kunststoffmaterial gebildet sind.

Eine gängige Herstellungsweise für derartige Hybridbauteile ist in der Patentschrift DE 10 2006 058 601 B4 beschrieben. Das vorbekannte Verfahren gliedert sich in folgende Schritte: Zunächst werden mehrere aus vorimprägnierten Fasermaterial bestehende Prepregs gestapelt, die vor oder nach dem Stapeln entsprechend der Geometrie des geformten Blechmaterials zugeschnitten werden. Anschließend wird das gestapelte Prepreg in einem separaten formgebenden Verfahren zu einer dreidimensionalen Vorform umgeformt. Diese Vorform wird mit einem Klebstoff beschichtet bzw. das Blechmaterial wird mit einem Klebstoff versehen. Anschließend werden die Vorform und das Blechmaterial unter Wärmeeinwirkung miteinander verpresst. Zum Stand der Technik wird auch auf die Patentschriften DE 10 2008 039 869 A1 und DE 10 2011 009 892 A1 verwiesen.

Beim Verpressen können freizuhaltende Randbereiche des Blechmaterials durch Kunststoffmaterial bzw. Harzmaterial verunreinigt werden. Hier besteht die Gefahr, dass sich das Harzmaterial später, insbesondere nach Aufbringen einer Beschichtung, vom Blechmaterial ablöst und Roststellen entstehen. In den Patentschriften DE 10 2010 048 118 A1 und DE 10 2010 048 399 A1 sind Maßnahmen beschrieben, wie sich derartige Verschmutzungen bzw. Verunreinigungen vermeiden lassen.

Der nächstliegende Stand der Technik ergibt sich aus der WO 02/066235 A1. In Fig. 4 ist eine Vorgehensweise veranschaulicht, bei der eine gewebte und mit Harzmaterial vorimprägnierte Preform (14) mittels Klebstofffilm (16) auf einem typischerweise metallischen Unter-Strukturteil (12) fixiert wird. Der Klebstofffilm (16) hat bezüglich der Preform (14) einen Überstand. Das Verpressen erfolgt im sogenannten Vakuumsackverfahren, wobei zur Erhöhung des Anpressdrucks aus flexiblem Material gebildete Druckstücke (18) verwendet werden, die hierzu im Vakuumsack (26) angeordnet werden.

Zum Stand der Technik wird ferner noch auf die Patentschriften US 2010/0269979 A1 und DE 36 34 596 A1 hingewiesen.

Der Erfindung liegt die Aufgabe zugrunde ein Verfahren eingangs genannter Art anzugeben, dass wenigstens einen mit dem Stand der Technik einhergehenden Nachteil nicht oder zumindest nur in einem verminderten Umfang aufweist.

Diese Aufgabe wird gelöst durch ein erfindungsgemäßes Verfahren mit den Merkmalen des Anspruchs 1.

Bevorzugte Weiterbildungen und Ausgestaltungen ergeben sich sowohl aus den abhängigen Ansprüchen als auch aus den nachfolgenden Erläuterungen.

Das erfindungsgemäße Verfahren zur Herstellung von Hybridbauteilen, die aus einem räumlich bzw. dreidimensional geformten Blechmaterial und einem faserverstärkten Kunststoffmaterial gebildet sind, umfasst zumindest die folgenden Schritte:
- Bereitstellen (wenigstens) eines räumlich geformten Blechmaterials;
- Bereitstellen (wenigstens) eines Fasermaterial enthaltenden Vorformlings;
- Aufbringen eines Klebers bzw. Klebstoffs auf das Blechmaterial und/oder auf den Vorformling und Fügen der Materialien zu einem Verbund, wobei der Klebstoff bezüglich der Außenkontur des Vorformlings einen Überstand bzw. einen überstehenden Klebstoffrand bildet bzw. aufweist; und
- Verpressen des Verbunds in einem Presswerkzeug, das eine Kavität aufweist, insbesondere unter Wärmeeinwirkung, wobei der überstehende Klebstoffrand während des Pressvorgangs in einem entsprechend ausgebildeten Kavitätsabschnitt mit hohem Druck gegen das Blechmaterial gepresst wird, wodurch eine Abdichtung zwischen dem Fasermaterial und dem Blechmaterial erreicht und im Bereich des überstehenden Klebstoffs bzw. Klebstoffrands eine, insbesondere direkte, Verunreinigung des Blechmaterials mit Harzmaterial verhindert wird.

Das erfindungsgemäße Verfahren weist viele Vorteile auf, von denen einige nachfolgend näher erläutert werden. Das erfindungsgemäße Verfahren kann weitere, im Folgenden nicht näher erläuterte Teilschritte und/oder Zwischenschritte umfassen.

Das bereitgestellte Blechmaterial weist eine in einem vorausgehenden Umformprozess erzeugte räumliche bzw. dreidimensionale Formgebung auf. Ein solches Blechmaterial kann auch als Blechformteil bezeichnet werden. Insbesondere handelt es sich um eine komplexe Flächengeometrie. Bei dem Blechmaterial handelt es sich bspw. um ein Aluminiumblech oder um ein Titanblech. Bevorzugter Weise handelt es sich um ein Stahlblech. Das bereitgestellte Blechmaterial bzw. Blechformteil weist insbesondere Endgeometrie auf.

Der bereitgestellte Fasermaterial enthaltende Vorformling ist bevorzugt aus einem oder mehreren Lagen (Stapel) eines mit Harzmaterial bzw. Matrixharz (welches nachfolgend die Kunststoffmatrix das faserverstärkte Kunststoffmaterial bildet) und einem thermisch aktivierbaren Binder imprägnierten Faserstoffs (vorimprägniertes Fasermaterial, auch als Prepreg bezeichnet), der insbesondere Kohlenstofffasern enthält, gebildet. Der Vorformling wird in an und für sich bekannter Weise in einem vorausgehenden Prozess erzeugt und weist sowohl eine endkonturnahe Außenkontur auf als auch eine räumliche bzw. dreidimensionale Formgebung, die zwar an die Formgebung des Blechmaterials angepasst ist, jedoch noch keine Formstabilität, sondern nur eine Vorform besitzt.

Das bereitgestellte Blechmaterial und der bereitgestellte Vorformling werden unter Verwendung eines Klebstoffs, der insbesondere in Form einer Folie oder eines Films vorliegt, in einem vorgesehenen Verbindungsbereich zu einem Verbund gefügt, was außerhalb des Presswerkzeugs oder direkt im Presswerkzeug erfolgen kann. (Anstelle des Vorformlings kann auch eine Drapierung des Blechmaterials mit einzelnen Faserstofflagen erfolgen, was jedoch aus verfahrensökonomischen Gründen nicht sinnvoll erscheint.)

Anschließend erfolgt die Verpressung des Verbunds in einem Presswerkzeug unter Wärmeeinwirkung, wozu das Presswerkzeug bspw. eine Heizeinrichtung aufweist. Hierbei wird das im Vorformling enthaltene Harzmaterial zunächst verflüssigt und dann ausgehärtet. Ferner wird im Wesentlichen gleichzeitig der Klebstoff ausgehärtet. Um eine optimale Verbindung zwischen dem Blechmaterial bzw. dem Blechformteil und dem faserverstärkten Kunststoffmaterial zu erreichen, ist eine vollflächige Verklebung vorgesehen. Die vollflächige Verklebung soll, neben der stoffschlüssigen Verbindung, auch eine elektrochemische Trennung bewirken, um elektrochemische Korrosionsreaktionen durch direkten Kontakt zwischen dem Blechmaterial und den Verstärkungsfasern des faserverstärkten Kunststoffmaterials zu unterbinden. Ferner ermöglicht die flächige Verklebung auch einen Toleranzausgleich.

Erfindungsgemäß ist vorgesehen, dass die Klebstofffläche bezüglich der Außenkontur bzw. des Außenumrisses des Vorformlings etwas zu groß dimensioniert wird. Der Kleber wird bspw. in Form einer Folie (Klebstofffolie) oder eines Films (Klebstofffilm) bereitgestellt und dementsprechend bezüglich der Außenkontur des Vorformlings etwas zu groß zugeschnitten. Somit steht der Klebstoff nach dem Fügen, insbesondere umlaufend, über die Außenkontur des Vorformlings über und bildet einen überstehenden Klebstoffrand, der an dem bezüglich der Außenkontur des Vorformlings größer dimensionierten Blechmaterial bzw. Blechformteil anhaften kann (insbesondere handelt es sich hierbei um einen äußeren Randbereich des Blechmaterials). Der Klebstoffrand weist z. B. eine Breite von 5 mm bis 40 mm und bevorzugt von 15 mm bis 25 mm auf.

Dieser Klebstoffrand verhindert, dass beim Verpressen aus dem Vorformling ausgepresstes Harzmaterial in dem den Vorformling umgebenden Randbereich in direkten Kontakt mit dem Blechmaterial gelangen kann. Insbesondere kann das Harzmaterial nicht in einen Spalt zwischen dem Klebstoff und dem Blechmaterial eindringen, da der überstehende Klebstoffrand auch eine undurchlässige Barriere bildet (wie nachfolgend anhand der Figuren noch näher erläutert).

Alternativ zu der vorausgehend erläuterten Vorgehensweise kann vorgesehen sein, dass anstatt eines aus vorimprägnierten Fasermaterial gebildeten Vorformlings wenigstens ein ungetränktes Fasergewebe (bspw. eine Fasermatte, ein Fasergelege oder dergleichen) verwendet wird, das mit oder ohne Vorformen zusammen mit dem Blechmaterial und unter Verwendung von Klebstoff in das Presswerkzeug eingelegt wird und erst im Zuge des Verpressens mit einem zugeführten Harzmaterial beaufschlagt wird (RTM-Verfahren). Auch hierbei kann ein überstehender Klebstoffrand als Barriere dienen, wie vorausgehend erläutert.

Bevorzugt ist vorgesehen, dass das Blechmaterial ungereinigt, d. h. ohne vorausgehende Reinigung, bereitgestellt wird und somit insbesondere noch eine Beölung (oder Rückbeölung) aus dem vorausgehenden Umformprozess aufweist. Besonders bevorzugt ist ferner vorgesehen, dass es sich bei dem Klebstoff um einen öltoleranten Klebstoff handelt, mit dem auch auf beölten bzw. ölartig verschmutzten Flächen eine Klebwirkung erzielbar ist. Durch den Entfall der Reinigung wird eine erhebliche Aufwands-, Zeit- und Kostenersparnis erzielt. Vor allem hierbei kommen Vorteile der Erfindung zum Tragen, da durch den überstehenden Klebstoffrand sichergestellt wird, dass das ölintolerante Harzmaterial nicht auf das beölte oder verunreinigte Blechmaterial gelangt oder in einen Spalt zwischen dem Klebstoff bzw. dem Klebstofffilm und dem Blechmaterial eindringt. (Anderenfalls würde das Harzmaterial auf dem beölten oder verunreinigten Blechmaterial keine Haftung erzielen und könnte sich später, auch nach dem kathodischen Tauchlackieren, ablösen, wodurch eine Roststelle entstehen würde.)

Das auf diese Weise hergestellte Hybridbauteil ist nach dem Entnehmen aus dem Presswerkzeug im Wesentlichen verbaufertig. (Ungeachtet dessen kann eine endgültige Aushärtung des Harzmaterials und/oder des Klebstoffs gegebenenfalls auch bei einer späteren kathodischen Tauchlackierung erfolgen.) Das hergestellte Hybridbauteil weist ein als Grundkörper dienendes Blechformteil auf, das auf einer Flächenseite zumindest bereichsweise mit einem faserverstärkten Kunststoffmaterial stoffschlüssig verbunden ist. Insbesondere handelt es sich um ein Karosserie- oder Fahrwerksbauteil für ein Kraftfahrzeug, vorrangig für einen Personenkraftwagen. Mit der erfindungsgemäßen Verfahrensweise können im Übringen auch mehrlagige Sandwichbauteile hergestellt werden.

Das erfindungsgemäße Verfahren sieht vor, dass der überstehende Klebstoffrand während des Pressvorgangs im Presswerkzeug in einem entsprechend ausgebildeten Kavitätsabschnitt mit lokal bzw. örtlich hohem Pressdruck gegen das Blechmaterial gepresst und hierbei komprimiert wird, wodurch eine Abdichtung zwischen dem, insbesondere vorimprägnierten, Fasermaterial und dem Blechmaterial erreicht wird, bei der der Klebstoff als Dichtung dient. Dies wird nachfolgend anhand der Figuren noch näher erläutert.

Ferner ist bevorzugt vorgesehen, dass der verwendete Klebestoff Fasern und insbesondere Wirrfasern enthält, die vorzugsweise aus einem korrosionsunkritischen Fasermaterial gebildet sind (bspw. Glasfasern, Naturfaser oder mineralische Fasern). Beim Verpressen eines solchen Klebstoffs, insbesondere im entsprechend ausgebildeten Kavitätsabschnitt (wie vorausgehend erläutert), steigt der Faservolumengehalt an, wodurch die Permeabilität (Durchlässigkeit) verringert und die Abdichtung gegenüber dem niederviskosen Harzmaterial verbessert wird.

Zur Abdichtung der Kavität des Presswerkzeugs kann wenigstens eine Abdeckfolie verwendet werden, die in die Kavität des Presswerkzeugs mit eingelegt wird. Bevorzugt wird wenigstens eine Abdeckfolie zur Abdichtung gegenüber dem Werkzeugoberteil, wobei es sich insbesondere um ein mehrteiliges Werkzeugoberteil handelt (wie nachfolgend noch näher erläutert) verwendet, wobei die Abdeckfolie hierbei insbesondere den Vorformling direkt abdeckt. Die Abdeckfolie kann nachfolgend, zumindest teilweise, vom hergestellten Hybridbauteil entfernt werden (oder gegebenenfalls auch dauerhaft auf dem Hybridbauteil verbleiben).

Ein geeignetes, nicht-erfindungsgemäßes Presswerkzeug umfasst ein Werkzeugunterteil und ein Werkzeugoberteil die mit einer Kavität, zum Verpressen des aus Blechmaterial und Fasermaterial (unter Einschluss des Klebstoffs) gebildeten Verbunds, ausgebildet sind, wobei diese Kavität einen Kavitätsabschnitt bzw. -bereich aufweist, in dem der bezüglich des Vorformlings überstehende Klebstoffrand während des Pressvorgangs mit lokal bzw. örtlich hohem Druck gegen das Blechmaterial pressbar ist, um beim Verpressen eine Abdichtung des, insbesondere vorimprägnierten, Fasermaterials gegenüber dem Blechmaterial zu erreichen (wie obenstehend erläutert).

Dieses Presswerkzeug ist bevorzugt in einer Presse oder dergleichen eingebaut und kann durch Absenken und Anheben des Werkzeugoberteils geschlossen und geöffnet werden. Durch pressenseitiges Aufbringen einer Schließkraft kann die in der Kavität wirksame Presskraft erzeugt werden.

Bevorzugt ist vorgesehen, dass das Werkzeugoberteil dieses Presswerkzeugs zweiteilig ausgebildet ist und ein inneres Werkzeugoberteil zum Verpressen des Verbunds und ein äußeres Werkzeugoberteil zum Pressen bzw. Komprimieren des überstehenden Klebstoffrands aufweist, wobei diese Werkzeugteile zueinander relativbeweglich und in Schließrichtung unabhängig mit einer Schließkraft beaufschlagbar sind.

Ein Hybridbauteil, das aus einem räumlich geformten Blechmaterial und einem faserverstärkten Kunststoffmaterial gebildet ist und mit einem erfindungsgemäßen Verfahren hergestellt ist, zeichnet sich dadurch aus, dass dieses einen das faserverstärkte Kunststoffmaterial zumindest teilweise umgebenden, insbesondere umlaufenden, und am Blechmaterial (insbesondere in dessen Randbereich) haftenden Klebstoffrand aufweist. Bevorzugt ist vorgesehen, dass das dieses Hybridbauteil eine durch kathodische Tauchlackierung aufgebrachte Beschichtung aufweist, die ausdrücklich auch den Klebstoffrand mit einschließt.

Die Erfindung wird nachfolgend anhand der schematischen Schnittdarstellungen in den Figuren beispielhaft und in nicht einschränkender Weise näher erläutert. Die in den Figuren gezeigten und/oder nachfolgend erläuterten Merkmale können, unabhängig von konkreten Merkmalskombinationen, allgemeine Merkmale der Erfindung sein.
- Fig. 1: zeigt einen Abschnitt eines Presswerkzeugs in geöffnetem Zustand.
- Fig. 2: zeigt das Presswerkzeug aus Fig. 1 zu Beginn des Pressvorgangs.
- Fig. 3: zeigt das Presswerkzeug aus Fig. 1 am Ende des Pressvorgangs.

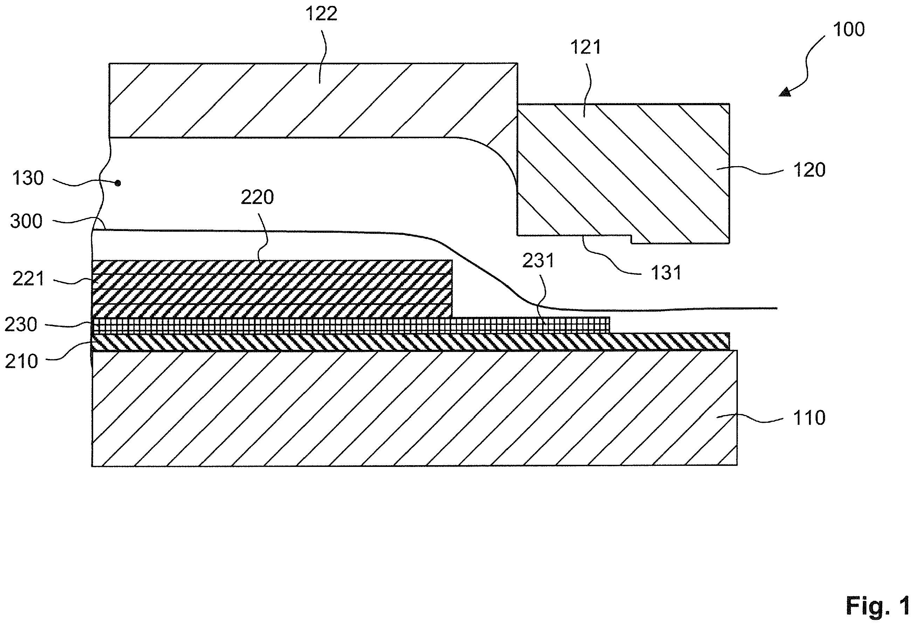

Fig. 1 zeigt ein beheiztes Presswerkzeug 100, das in einer nicht gezeigten Presse eingebaut ist. Das Presswerkzeug 100 umfasst ein Werkzeugunterteil 110 und ein Werkzeugoberteil 120, das aus einem äußeren Werkzeugoberteil 121 und einem inneren Werkzeugoberteil 122 gebildet ist. Mit 130 ist eine im Presswerkzeug 100 ausgebildete Kavität bezeichnet. Das Presswerkzeug 100 dient der Herstellung eines Hybridbauteils, wie nachfolgend erläutert.

Zur Herstellung eines Hybridbauteils 200 werden in die Kavität 130 des geöffneten Presswerkzeugs 100 ein räumlich geformtes Blechmaterial bzw. Blechformteil 210 und ein aus vorimprägniertem Fasermaterial 221 gebildeter Vorformling 220, der in dem gezeigten Beispiel aus mehreren Faserstofflagen gebildet ist, eingelegt (die räumliche Formgebung dieser Materialien ist in den Figuren nicht dargestellt). Zwischen dem Blechmaterial 210 und dem faserstoffhaltigen Vorformling 220 befindet sich ein faserhaltiger Kleber bzw. Klebstoff 230, der bezüglich der Außenkontur des Vorformlings 220 einen Überstand aufweist (gemäß Darstellung nach rechts), wodurch im Randbereich des in Bezug auf den Vorformling 220 größer dimensionierten Blechmaterials 210 ein Klebstoffrand 231 vorhanden ist, der jedoch nicht die Außenumrisse des Blechmaterials 210 überragt.

Der öl- und/oder ölschmutztolerante Klebstoff 230 wird in Form einer Folie oder eines Films bereitgestellt und ist insbesondere derart zugeschnitten, dass dieser einen den Vorformling 220 umlaufenden Klebstoffrand 231 ausbildet. Die miteinander zu verbindenden Materialien können direkt im Presswerkzeug 100 oder außerhalb des Presswerkzeugs 100 in die gezeigte Anordnung gebracht werden. Mit 240 ist eine Abdeckfolie bezeichnet, die eine zuverlässige Abdichtung der Kavität 130 gegenüber dem Werkzeugoberteil 120 gewährleistet.

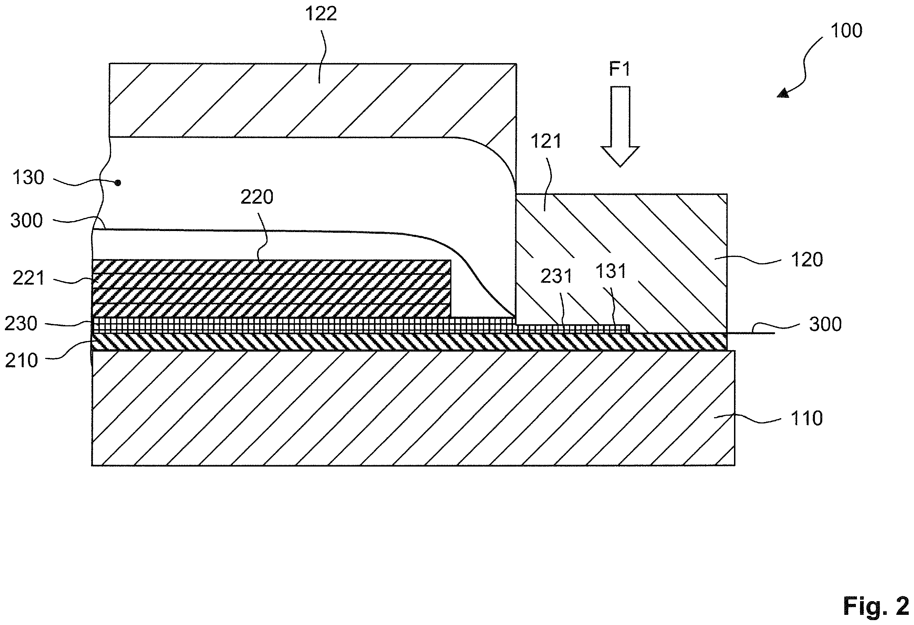

Zum Verpressen der in der Kavität 130 des Presswerkzeugs 100 angeordneten Materialien wird das Werkzeugoberteil 120 abgesenkt, wobei zunächst das äußere Werkzeugoberteil 121 mit einer definierten Schließkraft F1 gegen das Werkzeugunterteil 110 gedrückt bzw. gepresst wird. Dies in Fig. 2 gezeigt. Hierbei wird der Klebstoff 230 im überstehenden Klebstoffrand 231 durch den am äußeren Werkzeugoberteil 121 entsprechend ausgebildeten Kavitätsabschnitt 131 gegen das Blechmaterial 210 gedrückt bzw. gepresst und hierbei verdichtet bzw. komprimiert.

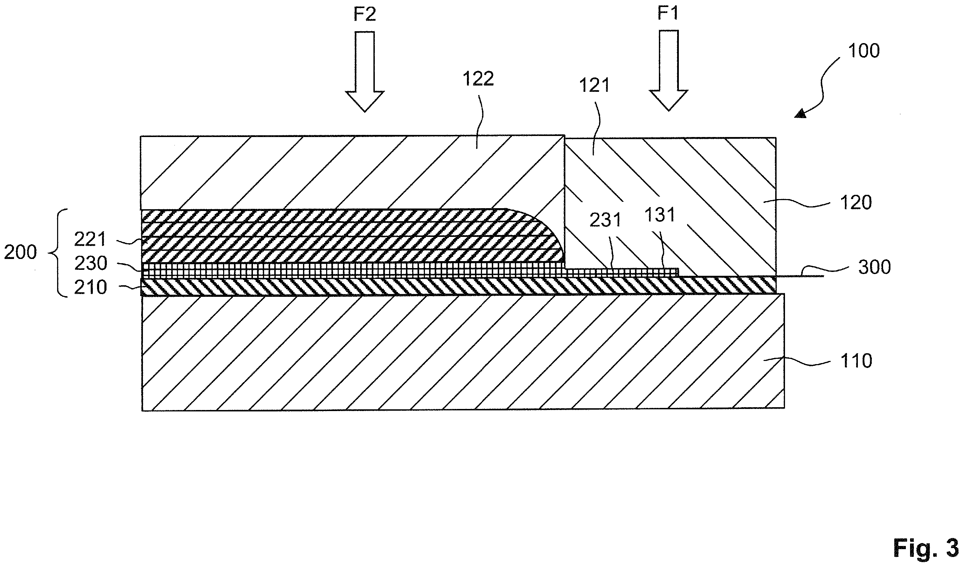

Hierdurch wird im Klebstoffrand 231 mit Hilfe des Klebstoffs 230 eine Abdichtung zwischen dem vorimprägnierten Fasermaterial 221 und dem Blechmaterial 210 erreicht, so dass beim anschließenden Verpressen dieser Materialien durch Aufbringen einer definierten Schließkraft F2 auf das innere Werkzeugoberteil 122 (unter Aufrechterhaltung der Schließkraft F1), wie in Fig. 3 gezeigt, aus dem vorimprägnierten Fasermaterial 221 austretendes Harzmaterial nicht mit dem Randbereich des Blechmaterials 210 in Kontakt gelangen kann.

Diese mit Hilfe des Klebstoffs 230 herbeigeführte Abdichtung am Klebstoffrand 231 wird verstärkt, indem der Klebstoff 230 durch Wärmeeinwirkung geliert und hierdurch dickflüssig wird. Durch die mit dem äußeren Werkzeugoberteil 121 bewirkte lokale Kompression bzw. Quetschung wird ferner der Faservolumengehalt im Klebstoff 230 lokal stark erhöht. Dies führt zu einer lokalen Verringerung der Permeabilität des Klebstoffs 230 im Klebstoffrand 231, wodurch sich die Dichtwirkung gegenüber dem Harzmaterial erheblich verbessert. Insbesondere wird verhindert, dass das verflüssigte, niederviskose und unter hohem Druck stehende Harzmaterial in einen Spalt zwischen dem Klebstoff 230 und dem Blechmaterial 210 eindringen kann.

Nach Aushärtung des Harzmaterials (wobei aus dem vorimprägnierten Fasermaterial 221 ein faserverstärkter Kunststoff gebildet wird) und des Klebstoffs 230 kann das Presswerkzeug 100 ausgehend von dem in Fig. 3 gezeigten Zustand durch Anheben des Werkzeugoberteils 120 geöffnet und das im Wesentlichen verbaufertige Hybridbauteil 200 entnommen werden. Im Weiteren kann das Hybridbauteil 200, insbesondere im verbauten Zustand, einer kathodischen Tauchlackierung unterzogen werden.

### Bezugszeichenliste

### Verfahren zur Herstellung von Hybridbauteilen

- 100: Presswerkzeug
- 110: Werkzeugunterteil
- 120: Werkzeugoberteil
- 121: äußeres Werkzeugoberteil
- 122: inneres Werkzeugoberteil
- 130: Kavität
- 131: Kavitätsabschnitt
- 200: Hybridbauteil
- 210: Blechmaterial
- 220: Vorformling
- 221: Fasermaterial
- 230: Klebstoff
- 231: Klebstoffrand
- 300: Abdeckfolie
- F1: Schließkraft (äußeres Werkzeugoberteil)
- F2: Schließkraft (inneres Werkzeugoberteil)

## Patentansprüche

1. Verfahren zur Herstellung von Hybridbauteilen (200), die aus einem räumlich geformten Blechmaterial und einem faserverstärkten Kunststoffmaterial gebildet sind, umfassend die folgenden Schritte:
- Bereitstellen eines räumlich geformten Blechmaterials (210);
- Bereitstellen eines Fasermaterial (221) enthaltenden Vorformlings (220);
- Aufbringen eines Klebstoffs (230) auf das Blechmaterial (210) und/oder auf den Vorformling (220) und Fügen der Materialien zu einem Verbund, wobei der Klebstoff (230) bezüglich der Außenkontur des Vorformlings (220) einen überstehenden Klebstoffrand (231) bildet; und
**ferner umfassend den kennzeichnenden Schritt:**
- Verpressen des Verbunds in einem Presswerkzeug (100), das eine Kavität (130) aufweist, wobei der überstehende Klebstoffrand (231) während des Pressvorgangs in einem entsprechend ausgebildeten Kavitätsabschnitt (131) mit hohem Druck gegen das Blechmaterial (210) gepresst wird, wodurch eine Abdichtung zwischen dem Fasermaterial (221) und dem Blechmaterial (210) erreicht und im Bereich des überstehenden Klebstoffrands (231) eine Verunreinigung des Blechmaterials (210) mit Harzmaterial verhindert wird.

2. Verfahren nach Anspruch 1,
**dadurch gekennzeichnet, dass**
das Blechmaterial (210) ungereinigt bereitgestellt wird.

3. Verfahren nach Anspruch 2,
**dadurch gekennzeichnet, dass**
es sich bei dem Klebstoff (230) um einen öltoleranten Klebstoff handelt.

4. Verfahren nach einem der vorausgehenden Ansprüche,
**dadurch gekennzeichnet, dass**
der verwendete Klebstoff Fasern und insbesondere Wirrfasern enthält.

5. Verfahren nach einem der vorausgehenden Ansprüche,
**dadurch gekennzeichnet, dass**
wenigstens eine Abdeckfolie (300) zur Abdichtung der Kavität (130) des Presswerkzeugs (100) verwendet wird.

## Claims

1. A method for producing hybrid components (200) which are formed from a three-dimensionally shaped sheet-metal material and a fibre-reinforced plastics material, comprising the following steps:
- providing a three-dimensionally shaped sheet-metal material (210);
- providing a preform (220) containing fibrous material (221);
- applying an adhesive (230) to the sheet-metal material (210) and/or to the preform (220) and joining the materials to form a composite, wherein the adhesive (230) forms a protruding adhesive edge (231) with respect to the outer contour of the preform (220); and
**further comprising the characterising step:**
- press moulding the composite in a compression mould (100) which has a cavity (130), wherein the protruding adhesive edge (231) during the pressing operation is pressed against the sheet-metal material (210) with high pressure in a correspondingly formed cavity portion (131), as a result of which sealing between the fibrous material (221) and the sheet-metal material (210) is achieved and contamination of the sheet-metal material (210) with resin material is prevented in the region of the protruding adhesive edge (231).

2. A method according to Claim 1,
**characterised in that**
the sheet-metal material (210) is provided in non-cleaned form.

3. A method according to Claim 2,
**characterised in that**
the adhesive (230) is an oil-tolerant adhesive.

4. A method according to one of the preceding claims,
**characterised in that**
the adhesive used contains fibres and especially randomly oriented fibres.

5. A method according to one of the preceding claims,
**characterised in that**
at least one cover film (300) is used for sealing off the cavity (130) of the compression mould (100).

## Revendications

1. Procédé de fabrication de composants hybrides (200) qui sont formés d'une tôle mise en forme dans l'espace et d'un matériau synthétique renforcé par des fibres, comportant les étapes suivantes consistant à :
- se procurer une tôle mise en forme dans l'espace (210),
- se procurer une préforme (220) renfermant un matériau à base fibres (221),
- appliquer un adhésif (230) sur la tôle (210) et/ou sur la préforme (220) et joindre les matériaux pour obtenir un élément composite, l'adhésif (230) formant un bord d'adhésif en saillie (231) par rapport au contour externe de la préforme (220),
comportant en outre les étapes caractérisantes, suivantes consistant à :
- comprimer l'élément composite dans un outil de moulage par compression (100) qui comporte une cavité (130), le bord d'adhésif en saillie (231) étant, pendant le processus de moulage par compression comprimé avec une pression élevée contre la tôle (210) dans un segment de cavité (131) formé en conséquence, de façon à obtenir une étanchéité entre le matériau à base de fibres (221) et la tôle (210) et à empêcher dans la zone du bord d'adhésif en saillie (231) une contamination de la tôle (210) avec une résine.

2. Procédé conforme à la revendication 1,
**caractérisé en ce que**
la tôle (210) n'est pas contaminée.

3. Procédé conforme à la revendication 2,
**caractérisé en ce que** l'adhésif (230) est un adhésif résistant à l'huile.

4. Procédé conforme à l'une des revendications précédentes,
**caractérisé en ce que**
l'adhésif utilisé renferme des fibres et en particulier des fibres enchevêtrées.

5. Procédé conforme à l'une des revendications précédentes,
**caractérisé en ce que**
l'on utilise au moins un film de recouvrement (300) pour permettre de garantir l'étanchéité de la cavité (130) de l'outil de moulage par compression (100).
